# EUROPEAN PATENT SPECIFICATION

(11) **EP 0 512 242 B1**
(45) Date of publication and mention of the grant of the patent: **10.05.1995**
(21) Application number: 92105419.3
(22) Date of filing: 30.03.1992
(51) Int. Cl.: H02G 3/26

(54) **Raceway for wires and cables, adapted to be installed on the floor**
Kanal für Drähte und Kabel zur Verlegung auf dem Boden
Canalisation pour fils et câbles, adaptée pour être installée sur le sol

(30) Priority: 10.05.1991 IT GE910020 U
(43) Date of publication of application: 11.11.1992
(73) Proprietor: BOCCHIOTTI SOCIETA'PER L'INDUSTRIA ELETTROTECNICA S.P.A., I-16121 Genova (IT)
(72) Inventor: Bocchiotti, Domenico, I-16121 Genova (IT)
(74) Representative: Porsia, Attilio, Dr.

(56) References cited:
- DE-U- 1 680 732
- DE-U- 8 913 040

## Description

This invention relates to raceways for wires and cables, of the type adapted for mounting on the floor.

It may be often necessary to lay electric wires, cables for informatic terminals, or the like, over the floor of a room for connection, for example, to an operative equipment arranged at the center of said room.

For this purpose, a number of types of wire-guiding raceways for anchorage to the floor have been proposed, an example having the features of the preamble of claim 1 being known from DE-U-8 913 040. These types of conventional raceways are formed by elements which are secured to the floor by stationary anchorage means, such as screws, or by adhesives such as, for example, adhesive tapes or the like.

All these conventional raceways require a complicated installation on the floor and removal therefrom, and anyway they require skilled labor for their installation, so that they can hardly be used for rapid provisional connections between an operative equipment arranged at the center of a room and, for example, an outlet socket at a wall.

The present invention aims to overcome these and other disadvantages of the conventional art by providing a raceway for anchorage to the floor, of the type specified above, easy to be installed and removed or displaced, and which does not require the use of skilled labor or tools for its installation or removal. This aim is achieved by the additional features defined in the characterising part of claim 1.

According to an embodiment of the present invention, said object is achieved by providing a raceway for anchorage to the floor, comprising a baseplate and a cover snap-fitted on said baseplate, said baseplate being provided with means for accommodating and for connecting thereto in an easily disconnectable manner suction cups for anchoring the raceway to the floor.

Further characteristics and advantages of the present invention will become more apparent from the following detailed description of a preferred embodiment thereof, shown as a non-limiting example on the accompanying sheet of drawing, wherein:
Figure 1 is a cross sectional view of a raceway according to the invention, and
Figure 2 is a fragmentary plan view of the baseplate of the raceway of figure 1, the cover being removed.

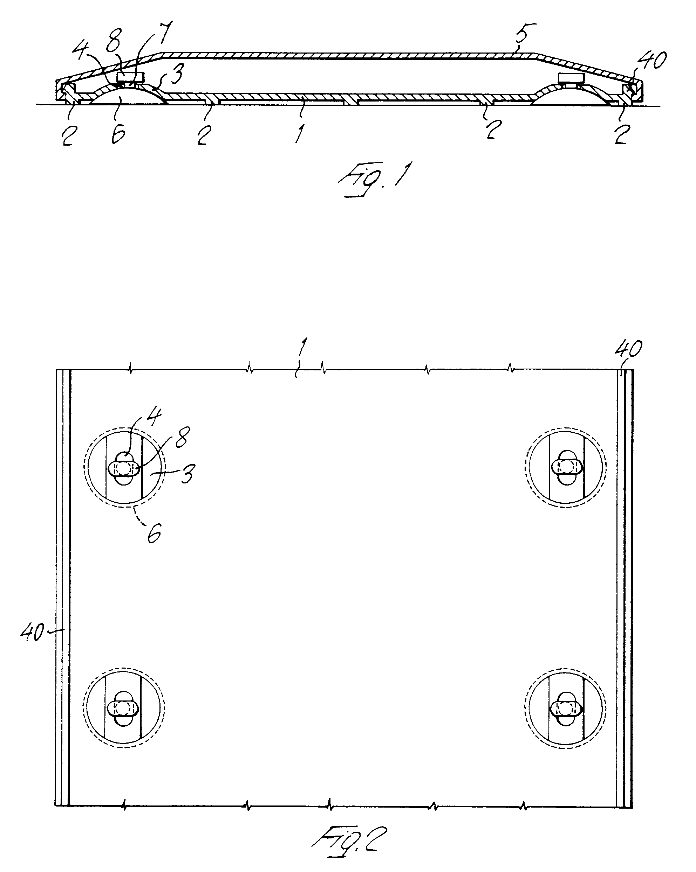

With reference to the drawing, the raceway comprises a baseplate 1 provided with outer ribs 2 for reasting on the floor. Formed in the baseplate 1 are spherical segment recesses 3 provided with a central through-slot 4 for the purpose to be discussed below. The baseplate 1 is provided at both sides with a suitably-shaped rim 40 for engagement with a complementary shaped rim of the cover member 5.

Accommodated in the recesses 3 are suction cups 6 provided at the top with a tang 7 having secured thereto a retaining head 8 having a shape which is complementary to the slot 4 for locking in an easily unlockable manner the suction cups 6 to the baseplate 1 by inserting the head 8 into the slot 4 and then rotating said head through 90° with respect to the slot 4.

The operation of the raceway described above will be now apparent.

Once the suction cups 6 have been secured into the recesses 3 of the baseplate 1, said baseplate is anchored to the floor by the action of the suction cups 6.

By using the raceway element according to the invention, therefore, the advantage is obtained of a very quick installation of said raceway and of a similarly quick disconnection thereof either for its removal or its different arrangement, without resorting to skilled labor or using any tool.

## Claims

1. A raceway for wires and cables, adapted to be installed on the floor, comprising a baseplate (1) and a cover member (5), characterized in that said baseplate (1) is provided with suction cups (6) for anchoring to the floor.

2. The raceway according to claim 1, characterized in that said baseplate (1) comprises spherical segment recesses (3) for accommodating said suction cups (6).

3. The raceway according to any of the preceding claims, characterized in that said suction cups (6) are secured to said baseplate (1) in an easily releasable manner.

4. The raceway according to the preceding claim, characterized in that said recesses (3) in the baseplate are provided at the top with a slot (4), and in that said suction cups (6) are provided at the top with a head member (8) whose shape is complementary to that of said slot (4) for releasably securing said suction cups (6) to the baseplate (1) of the raceway.

## Patentansprüche

1. Kanal für Drähte und Kabel zur Verlegung auf dem Boden mit einer Grundplatte (1) und mit einer Abdeckung (5),
**dadurch gekennzeichnet**,
daß die Grundplatte (1) mit Saugnäpfen (6) versehen ist, um sie am Boden zu verankern.

2. Kanal nach Anspruch 1,
**dadurch gekennzeichnet**,
daß die Grundplatte (1) Aufnahmen (3) in Gestalt kugelförmiger Segmente aufweist, die zur Aufnahme der Saugnäpfe (6) dienen.

3. Kanal nach Anspruch 1 oder 2,
**dadurch gekennzeichnet**,
daß die Saugnäpfe (6) leicht lösbar an der Grundplatte (1) befestigt sind.

4. Kanal nach dem vorhergehenden Patentanspruch,
**dadurch gekennzeichnet**,
daß die Aufnahmen (3) in der Grundplatte an der Oberseite einen Schlitz (4) haben, und daß die Saugnäpfe (6) an der Oberseite einen Kopf (8) haben, dessen Form komplementär zu derjenigen des Schlitzes (4) ist, damit die Saugnäpfe (6) lösbar an der Grundplatte (1) des Kanals befestigt werden können.

## Revendications

1. Canalisation pour fils et câbles, destinée à être installé sur le plancher, comprenant une plaque d'assise (1) et un couvercle (5), caractérisée en ce que la plaque d'assise (1) est munie de ventouses (6) destinées à l'ancrer au plancher.

2. Canalisation selon la revendication 1, caractérisée en ce que la plaque d'assise (1) comprend des évidements (3) en forme de segment sphérique destinés à loger les ventouses (6).

3. Canalisation selon l'une quelconque des revendications précédentes, caractérisée en ce que les ventouses sont fixées à la plaque d'assise (1) d'une manière facilement amovible.

4. Canalisation selon la revendication précédente, caractérisée en ce que les évidements (3) ménagés dans la plaque d'assise sont munies en leur sommet d'une fente (4) et en ce que les ventouses (6) sont munies en leur sommet d'une tête (8), dont la forme est complémentaire de celle de la fente (4), de manière à fixer de façon amovible les ventouses (6) à la plaque d'assise (1) de la canalisation.
